# EUROPEAN PATENT APPLICATION

(11) **EP 2 071 846 A1**
(43) Date of publication of application: **17.06.2009**
(21) Application number: 07816969.5
(22) Date of filing: 25.09.2007
(51) Int. Cl.: H04N 7/173, H04N 7/24, H04N 5/44, H04L 29/06

(54) **METHOD, SYSTEM AND MEDIA SERVER FOR IPTV CHANNEL QUICKLY SWITCHING**

(30) Priority: 25.09.2006 CN 200610139479
(71) Applicant: Huawei Technologies Co., Ltd., Longgang District, Shenzhen Guangdong 518129 (CN)
(72) Inventor: WU, Xiangyang, Shenzhen Guangdong 518129 (CN); YAN, Jun, Shenzhen Guangdong 518129 (CN)
(74) Representative: Gulde Hengelhaupt Ziebig & Schneider
(86) International application number: PCT/CN2007/070778
(87) International publication number: WO 2008/037218

(57) **Abstract**

The present invention discloses a method for quick switch of the IPTV channels. The method includes the following steps. The terminal receives a channel switch media stream of a target channel and a media stream of the target channel and plays the channel switch media stream of the target channel before the media stream of the target channel can be played. The present invention further provides a system for quick switch of IPTV channels and a media server thereof. In a solution provided by the present invention, when the terminal wants to switch the channel, it may directly decode the channel switch media stream of the target channel from the received channel switch media stream and pre-playback the channel switch media stream without an extra signaling request and an extra request for joining multicast of access network. Therefore, the goal of quick switch of the channels is achieved. The present invention skips a signaling handling procedure for the access node, and eliminates the delay for the media stream to deliver from the media server to the access node and the possible delay in the application signaling interaction between the terminal and the network, thus shortening the time for channel switching significantly.

## Description

### FIELD OF THE INVENTION

The present invention relates to IPTV services, and more specifically, to methods, systems for quick switch of IPTV channels and media server thereof.

### BACKGROUND

With the development of internet technologies, IPTV service over IP network springs up rapidly in recent years. This service introduces the traditional TV service into the IP network. The present invention involves Session Initiation Protocol (SIP), IP Multimedia Subsystem (IMS), Next Generation Network (NGN), streaming media technology, IP multicasting, techniques for frame and scene in the video, etc. These techniques are briefly introduced below.

SIP, one of multimedia communication system framework protocols developed by Internet Engineering Task Force (IETF), is an application level protocol used to establish, change or terminate multimedia sessions. When cooperating with protocols such as the Real-time Transport Protocol (RTP), Real-time Transport Control Protocol (RTCP), Session Description Protocol (SDP), Real-time Streaming Protocol (RTSP), Domain Name Service (DNS), the SIP and these protocols jointly complete session setup and media negotiation in the IMS. Once the session is set up, the media stream may be transmitted directly in a bearer layer with RTP protocol. Multiple types of media may interact with one another with flexibility in one session.

Since the SIP is based on publically available internet standards, the SIP has advantages in terms of voice and data service integration and interoperation. With the SIP, call control can be realized independent of media and devices, various media formats are supported, and dynamic addition and deletion of media streams can be achieved, thereby providing more enriched service features. Additionally, the SIP supports the development of intelligent service and intelligent terminals, so that the workload of the network can be alleviated. The SIP itself supports mobility functions on application layer level such as dynamic registration, location management, redirection mechanism, etc., and features such as presence, fork, subscription, etc. Based on the SIP, new services can be extended with ease. The content of the SIP is simple with widely recognized scalability. Therefore, the SIP is gaining more and more popularity in IMS and NGN.

Furthermore, in today's world with a highly-developed communication and information technologies, with the emergence of the IP technology with cross link layer transmission media, and the prevalence of the internet applications, people are no longer satisfied with a solely voice communication manner, but a grand new multimedia communication manner. The mobile communication network and fixed communication network using IP technology, and the convergence of internet and telecommunication network, have indisputably become topics of future development. To meet the increasing needs for IP multimedia applications, the 3^{rd} Generation Partnership Project (3GPP) has introduced IMS with all-IP service network architecture on the basis of packet bearer network. The object is to disguise the user access manner, control openness of the service capability according to customized user profile so as to provide multimedia communication experience.

IMS, introduced in the 3GPP R5 stage, is a subsystem formed by overlaying a WCDMA network with the existing packet switched domain. The packet switched domain serves as an upper layer control signaling and a bearer channel for media delivery. The SIP is introduced as a service control protocol. With SIP's simpleness, scalability, convenience in media convergence, the IMS separates service control and bearer control, and provides rich multimedia services. The main function entities in the IMS include a Call Session Control Function (CSCF) entity for user registration control and session control, etc., an application server (AS) providing various service logic control functions, a Home Subscriber Server (HSS) for managing user subscription data, a Media Gateway Control Function (MGCF) and an IP multimedia-media gateway (IM-MGW) for interworking with a circuit switched network. The user accesses the IMS via a proxy-CSCF (P-CSCF) where the user locates. The session and service trigger control and the interaction with the AS service control are implemented by home domain serving-CSCF (S-CSCF) of other registration place.

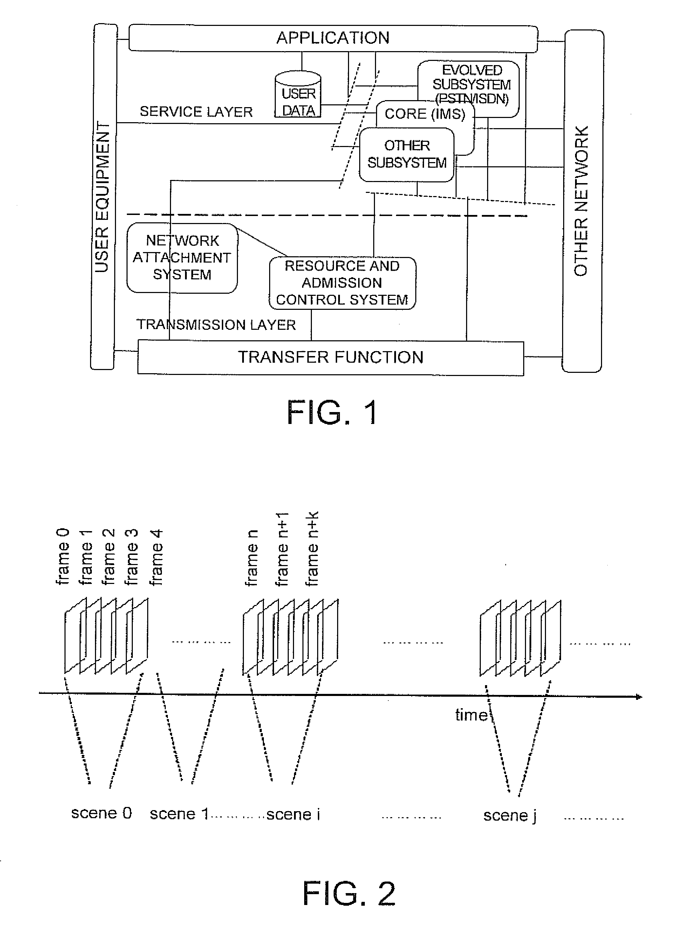

It is well known that the NGN is a converged type network based on packet technology. Relying primarily on packet switching, the NGN adopts an architecture in which the bearer and control are separated. The NGN inherits all the original services from the public switched telephone network and the service capability from the mobile network as well. Therefore, the NGN collects the merits of fixed telephone network, mobile telephone network and IP network, and allows the analog users, digital users, ADSL users, ISDN users, IP narrowband network users, IP broadband network users, and even users who gain access through satellite to communication with one another as a member of NGN. Figure 1 illustrates an overview of an NGN architecture of Telecommunications and Internet converged Services and Protocols for Advanced Networking (TISPAN).

Streaming media service is a new service developed rapidly in recent years. The streaming media service utilizes a streaming transport technique to transmit multimedia files, including video and audio content, etc., over the packet switched network. These contents can be played instantly without a complete download when being accessed. The streaming transport technique is a key technique for achieving the streaming media. The streaming transport technique is a network transport technique that processes the continuous video and audio information and places the information into a web side server. The user may download the video and audio while viewing, listening to the video and audio, rather than downloading the whole file to the local first before the content can be watched.

IP multicast is a technology that transmits service based on D class IP address. The sender may utilize IP multicast to provide the same service content simultaneously to multiple receivers. Since transmitting the same content to the specified multicast address once is enough, the IP multicast can effectively alleviate the workload of the service sender and the transmission network.

To obtain the multicast content, the user, which is the content receiver, may join the service multicast group via a protocol such as Internet Group Management Protocol (IGMP), etc., to request an adjacent router to send service content to the user. The routers interact with one another via a multicast routing protocol such as Protocol Independent Multicast-Sparse Mode (PIM-SM). In this way, the multicast service content can pass the content to the content receiver along a multicast forwarding path from a multicast source.

In the case where the service flow is delivered by multicast, the service sender only need to send one data flow regardless of the number of receivers. The multicast data only generates a single data stream between a service sending point and a transmission point along a transmission path to the receiver. Therefore, the use of multicast technology can alleviate the workload of the sender, i.e., service provider, and can make full use of the network resources.

Figure 2 illustrates the relationship between the frame and scene in video sequence. Scenes are generated when the video contents are shoot and produced. As shown in Figure 2, one scene may include multiple frames.

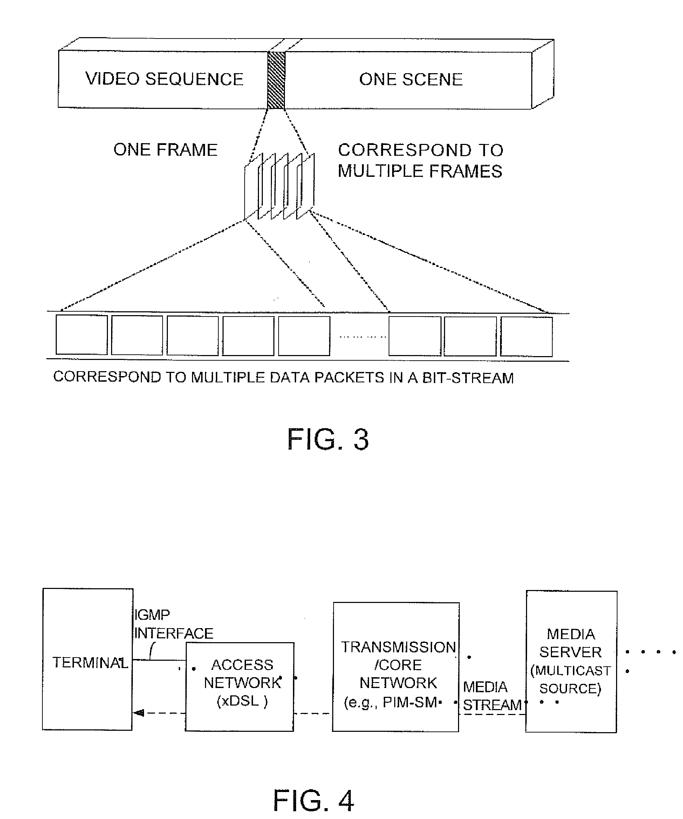

Figure 3 shows the relationship between a scene, a frame and a data packet in the video bit-stream. In general, one scene includes intra coded frames (I frames), prediction coded frames (P frames) and bi-directional prediction coded frames (B frames). I frames are called with respect to P frames and B frames. The coding of an I frame is totally based on itself, rather than on other frames. However, the decoding of P frames is dependent on previous reference frames, while the decoding of B frames is dependent on its prior or posterior reference frames. Therefore, the decoding of I frames is the simplest. The decoding of I frames only involves an inverse entropy coding, de-quantizing, inverse discrete cosine transformation (DCT), with no motion compensation involved, as long as the I frames relate to a compression coding standard based on DCT and entropy coding concept, such as International Telecommunication Union (ITU) H.26x series and Motion Picture Expert Group (MPEG) series. Therefore, I frame decoding requires the least computational complexity. If other types of frames, P frames for example, want to decode the P frames from the video bit-stream, several P frames prior to this frame need to be decoded up to the closest frame. However, for an I frame, only the I frame itself needs to be decoded. Comparing the two types of frames, the decoding complexity differs dramatically. Furthermore, several I frames may exist in one scene, in the case where a scene lasts quite a long time, for example.

Generally, scenes may vary significantly with one another in producing and coding the media contents. One scene may generate at least one I frame. In an encoder, although there is no compulsory requirement when to insert I frame, however, generally, when the scene changes, I frame is inserted. The first frame of the scene is usually an I frame. Of course, the above statement may not be applicable to new standards, such as H. 264. Because, in H. 264, there is no one complete I frame, but some intra coding on only some part of the frame. For instance, a slice may be intra coded independently. In the case where no complete I frame may exist, some corrected selection criteria can be defined, for instance, to select a frame which has the most intra coded slices or macroblocks (MB). For a general coding protocol, identification mechanism for identifying I frame or intra coded slice, etc., is always provided. For instance, H. 264 standard of ITU utilizes an Instantaneous Decoder Refresh (IDR) identifier to identify the frame or intra coded slice. Therefore, it is technically feasible to extract I frame or intra coded slice or MB from the video stream or video file. For purpose of explanation, we call them I frame in unity, which includes the special definition and process regarding H. 264, etc.

Since IP teclmology can provide services similar to traditional TV services, IPTV technology provides users with great flexibility and improves the user experience tremendously. However, IP technology brings a series of problems that needs to be addressed. For instance, quick switching of IPTV channels is an impending issue to be solved for promoting IPTV services. Otherwise, if the speed of channel switching based on IP technology is too slow, for example, longer than 2 seconds or 1 second, the user experience become degraded and the IPTV may not appeal to users effectively. In other words, in this case, the IPTV cannot meet the requirement for practical application.

For traditional TV technology, the content of all the channels is distributed to a user side in a frequency division fashion, for instance, with the common Cable TV. At this point, the terminal just needs to tune to a playing channel or frequency band of a corresponding channel if the terminal needs to switch channels. For IPTV, considering the bandwidth restriction, the content relating to the frequency is sent to the terminal on demand. That is, the user is provided with the content of one or several channels at a time, rather than provided with the content of all the channels. At this point, channel switching involves signaling interaction between the terminal and the network. Because the mechanism is different, a delay in channel switching may occur during each stage, thereby affecting the ultimate user experience. Currently, several solutions in the art are proposed to address the issue of switching delay.

### A first solution in the prior art

For live IPTV services, a solution based on xDSL is illustrated in Figure 4. Referring to Figure 4, the solution adopts IP multicast technique to deliver media stream to the terminal. The user utilizes the IGMP or Multicast Listener Discovery (MLD) protocol to access the multicast address of the channel from the access node to receive the program of the channel. Multicast routing technique is used in a transmission and core network, to establish a multicast forwarding path. The multicast data packet sent from the media server reaches the access network via the transmission and core network and finally reaches the user terminal. To better control the user, user channel right control is performed at xDSL access node, for instance, Digital Subscriber Line Access Multiplexer (DSLAM) or Broadband Remote Access Server (BRAS). The channel switching request from the user is ultimately reflected in the use of IGMP or MLD protocol by the terminal to join or leave the multicast group of the playing channel. By checking a right list in the DSLAM or BRAS, it is determined whether or not to allow the user to perform the current channel switching operation. When using this solution to provide service, channel switching delay is caused by the following factors. 1) a delay occurred when an access point, e.g., DSLAM, BRAS processes the IGMP or MLD; 2) a delay occurred when the media stream is sent from the media server to the access node; 3) a delay occurred when the terminal decodes media stream and displays the media stream.

In addition, in this solution, to minimize the channel switching delay, the content of multiple channels may be sent in advance to an access network edge. When the user requests the content of the channel, the content is delivered to the user terminal directly from the access node. In this way, the delay occurred when the media stream is delivered from the media server to the access node is reduced. When no user is watching the content, the access node may discard the received content.

The first solution in the prior art is focused on the delay in media delivery, and may reduce the channel switching delay to some extent. However, the switching delay caused by other factors are not addressed, for instance, the delay occurred when the user sends the IGMP or MLD signaling and the delay occurred when the access network handles the signaling, etc.

### A second solution in the prior art

The second solution in the prior art primarily adopts a layered video coding technique. The layered video coding is a method for performing layered compression coding on video data stream. The main concept is to output multiple coding layers. The main part is a base layer, with multiple enhancement layers on the base layer. Then base layer and the enhancement layers may be transmitted separately along different network paths. At the receiving end, the base layer can be decoded and base layer video can be reconstructed independently. However, respective videos of the enhancement layers can be decoded and reconstructed only by relying on the base layer, or the enhancement layer beneath the base layer, or the base layer and the enhancement layer beneath the base layer. At the receiving end, the decoded and reconstructed video bit-stream for the base layer and each enhancement layer may be overlaid upon one another according to a specific layered video coding rule in order to obtain a resulting video bit-stream.

The second solution in prior art utilizes the above technique to code the video stream, and base layer coding is performed with small resolution. Therefore, the data rate is smaller and the transmission delay in the network is reduced. The terminal may decode the base layer at a quicker speed. With this solution, the switching delay in terms of network transmission time and coding and decoding time is improved to some degree.

However, the second solution in the prior art has the following shortcomings: 1) coding complexity and device complexity are increased due to the base layer and the enhancement layer coding; 2)although the combination of the first solution in the prior art and the second solution in the prior art may reduce the transmission delay of the transport and core network, the delay due to the processing of IGMP by the access network still remain unalleviated.

### A third solution in the prior art

With the NGN network getting mature, a method for separating service control from bearer layer of NGN network is also taken into consideration. The solution uses service signaling to request the IPTV channel. In addition, the terminal may also need to use signaling to interact with service entity or media server when switching channels. After receiving user request, the service entity or media server authenticates the user, records the status and charges the fee, etc. Further, multicast address of the channel, service protection information, etc., may be carried in a response sent from the service entity or media server. After receiving these information, the terminal may send IGMP or MLD, etc., according to a given multicast address. The IGMP or MLD is used to request channel media stream from the network. The returned service protection information can be used by the terminal to successfully decode the content. With this concept, this solution for developing IPTV service based on IMS network may refer to another Chinese Patent Application No. 2006100034107.3 to the same applicant of the present patent application.

In the third solution in the prior art, since signaling interaction is introduced, a delay caused thereby is also introduced. Although techniques similar to the first solution in the prior art and the second solution in the prior art may be adopted to handle the channel switching delay issue, the delay due to the signaling interaction, however, still remains a problem for the first solution in the prior art and the second solution in the prior art.

In conclusion, the first solution in the prior art which utilizes a traditional IP multicast technique and access-side right control technique does not consider the time optimization issue when the access network handles the request for joining multicast. Moreover, the second solution in the prior art, which combines the base layer media stream based on layered coding technique and the access-side right control technique, may not only result in a terminal and device implementation complexity, but also does not consider the time optimization issue when the access network handles the request for joining multicast. In addition, the third solution in the prior art utilizes an independent service layer signaling to negotiate service, which introduces accordingly a delay on signaling level. Therefore, optimization is also needed in the third solution in the prior art in order to reduce the delay in channel switching.

### SUMMARY

Accordingly, a method and a system for quick switching of IPTV channels and a media server thereof are provided according to embodiments of the present invention so as to reduce the time delay in channel switching.

To this end, a method for quick switching of IPTV channels based on NGN according to an embodiment of the present invention includes:
receiving, by a terminal, a channel switch media stream of a target channel and a media stream of the target channel; and
playing the channel switch media stream of the target channel before the media stream of the target channel can be played.

A system for quick switching of IPTV channels according to an embodiment of the present invention includes:
a terminal, configured to initiate a channel switching request, and play a channel switch media stream of a target channel before a media stream of the target channel can be played;
a media server, configured to send to the terminal the channel switch media stream of the channel and the media stream of the target channel.

A media server is also provided according to an embodiment of the present invention. The media server includes:
a unit for generating channel switch media stream, configured to generate a channel switch media stream for a target channel based on a media stream of the target channel;
a media stream transmitting unit, configured to send to the terminal at least one of the media stream and the channel switch media stream of the target channel.

Solutions according to the present invention provide an independent channel switch media stream at the media server. The channel switch media stream may contain a channel switch media stream of one channel or multiple channels. Therefore, when the terminal wants to switch the channel, it may directly decode the channel switch media stream of the target channel from the received channel switch media stream and pre-playback the channel switch media stream without an extra signaling request and an extra request for joining multicast of access network. Thus, the goal of quick switching of the channels is achieved. The present invention skips a signaling handling procedure for the access node, and eliminates the delay for the media stream to deliver from the media server to the access node and the possible delay in the application signaling interaction between the terminal and the network, thus shortening the time period for channel switching significantly.

### BRIEF DESCRIPTION OF THE DRAWINGS

Figure 1 is a conventional schematic of network architecture of TISPAN NGN;

Figure 2 illustrates relationship between frame and scene in video sequence in the prior art;

Figure 3 illustrates relationship among scene, frame and data packet in the video bit-stream in the prior art;

Figure 4 illustrates a prior art schematic of IPTV solution based on xDSL;

Figure 5 illustrates a schematic of a quick channel switching according to an embodiment of the present invention;

Figure 6 illustrates a logic architecture of a communication network according to an embodiment of the present invention;

Figure 7 illustrates a flowchart of a method according to an embodiment of the present invention;

Figure 8 illustrates a logic architecture of a communication network according to another embodiment of the present invention;

Figure 9 illustrates a network architecture where the IMS core (IMScore) operates as an intermediate processing module according to an embodiment of the present invention;

Figure 10 illustrates a flowchart of another method according to an embodiment of the present invention;

Figure 11 illustrates a schematic of another network architecture according to an embodiment of the present invention; and

Figure 12 is block diagram of a media server according to an embodiment of the present invention.

### DETAILED DESCRIPTION

The purposes, technical solutions and advantages concerning the embodiments of the present invention will become more readily appreciated by reference to the following description of the embodiments.

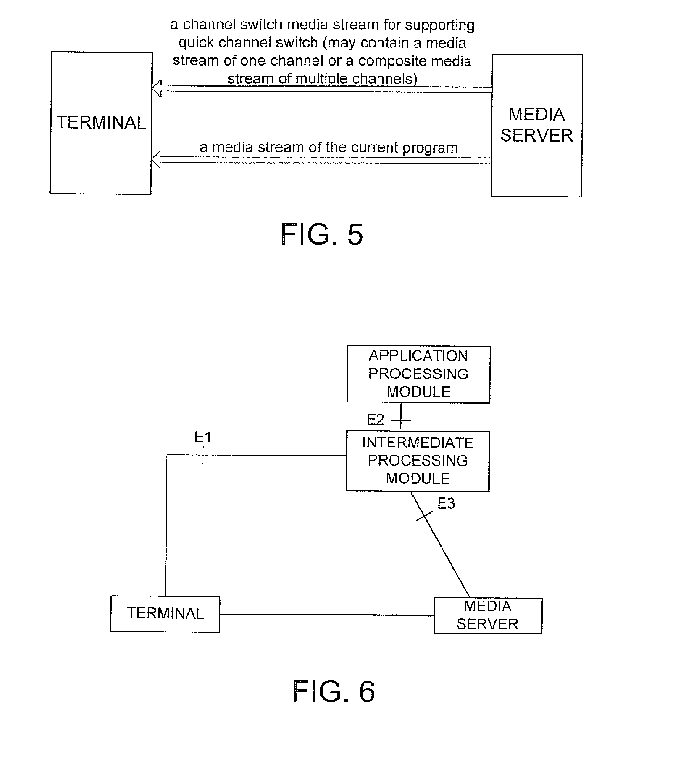

Network authentication is needed when a terminal is switching the channel. A signaling delay occurred during this process may delay the arrival of a target channel media stream. Also, the transmission of a high resolution image takes a certain period of time, which may also results in a switching delay. Therefore, in an embodiment of the present invention, a channel switch media stream, e.g., low resolution or quasi-dynamic video stream, corresponding to the current content of the channel is sent with priority during channel switching. The terminal may use this low resolution or quasi-dynamic video to fill up this delay period before receiving the channel content. As a result, the user may be able to experience a continuous switching process, and the channel switching period is shortened accordingly. The user is provided with a better experience. This process is shown in Figure 5- Referring to Figure 5, a media server may provide the terminal, at the same time, with a normal media stream of the current program and a channel switch media stream supporting quick channel switching. The channel switch media stream may contain the channel switch media stream of a target channel only, or may be a composite media stream containing the channel switch media streams of multiple channels, e.g., a composite media stream of all the channels.

In an embodiment of the present invention, a second media transport channel, independent of a first media transport channel for transmitting a normal media stream, is set up upon an initial channel request. The transport channel is used to transmit quickly a low resolution or quasi-dynamic media stream relating to the target channel when the user is switching the channel. Of course, the transport channel may transmit the low resolution or quasi-dynamic media streams of all the channels to the user when the user is watching a certain channel. When the user is switching the channel, the terminal may decode rapidly the video content of the target channel based on the low resolution or quasi-dynamic media stream of the channel and display the decoded video content. Although the video information is of low resolution or quasi-dynamic, it is acceptable to use the video information to fill the "blank" or "grey screen" time during switching, considering human's visual residual effect. Meanwhile, the terminal may continue to request for channel switching, and receive and decode the high resolution video at the background. When the high resolution video is ready, the low resolution video or quasi-dynamic image can be replaced with this high resolution video.

Overall, if the low resolution or quasi-dynamic video is sent from the media server to the user when switching the channel, part of the time can be saved when sending the high resolution media stream. If the low resolution or quasi-dynamic videos of all the channels are sent to the user in advance, not only the transmission time for the high resolution media stream can be saved, but the delay due to the signaling for channel request can be reduced. Such result is remarkable.

Figure 6 illustrates a logic architecture of a communication network according to an embodiment of the present invention. Referring to Figure 6, the system includes a terminal, a media server, an intermediate processing module and an application processing module.

Besides the normal functionalities as provided in the prior art, such as initiating a channel request, playing a normal media stream of a channel, etc., the terminal may further be able to receive the channel switch media stream from the media server and play the channel switch media stream before the target normal media stream can be played. In addition to the first media channel for transmitting the normal media stream, a second media channel for transmitting the channel switch media stream is provided between the terminal and the media server. The second media channel is typically established at the time the terminal initiates a first channel request.

The media server may accept the request from the application processing module or control the delivery of specified media files or media streams for the terminal, including the normal media stream the channel switch media stream. The generation of the channel switch media stream will be discussed below. The IP network connects the terminal and the media server. Like the prior art, the IP network can be categorized into an access network and a transmission and core network, etc., the description of which is omitted herein for brevity.

The intermediate processing module provides functions like call control, routing connection for the users in the access core network. It can route the call to the called user terminal, or can route the call to the application processing module, which equals forwarding message between the terminal and the application processing module and between the application processing module and the media server. An interface E1 exists between the terminal and the intermediate processing module. An interface E3 exists between the intermediate processing module and media server. The interface E1 may employ SIP, HTTP, RTSP, etc. Interface E3 may employ SIP, Diameter, H.248, RTSP, etc.

The application processing module is configured to handle a user request. Here, the application processing module is primarily configured to handle service logic for IPTV service. Interface E2 exists between the intermediate processing module and the application processing module. The interface E2 may employ SIP, HTTP, RTSP, etc.

With the system architecture shown in Figure 6, the user terminal may request the application processing module to return channel description information by sending a channel request signaling. Alternatively, the user terminal may request to perform channel switching by using application layer signaling. The response to the switching request from the application processing module is still description information of the target channel to be switched. This processing procedure is described in Chinese Application No. 2006100034107.3 to applicants of the present application. After acquiring the information, the terminal may establish a media channel with the media server for media stream delivery.

A method for generating a channel switch media stream by the media server is described below.

A low resolution or quasi-dynamic video is taken as an example. The channel switch media stream is intended to have a short transmission period and take up less extra bandwidth. The following techniques can be applied to the media server for generating a channel switch media stream.

1. Since I frame in the video can be decoded independently, I frame can be extracted from a media stream of a channel in order to form a quasi-dynamic media stream.

2. Since the ratio of bit rates of I frame to B frame P frame in a typical media stream is 8:2:3 or so, the result of extracting I frame only may not be desirable. To further lower the bandwidth taken up by channel switch media stream, each I frame may further be downsized. If the resolution is reduced to 1/4 or 1/16 of the original one, the bandwidth taken up by the whole media stream can be reduced significantly, and transfer speed can be enhanced, and thereby the delay time is reduced.

3. To further downsize the media stream, a method of taking m frames out of n frames for the newly formed media stream may be adopted, which is to take m frames (1<=m<=n) out of n consecutive I frames and insert them to a new media stream. To achieve a better result of continuity, in practice, the extraction ratio can be adjusted as the dynamic rate of the image varies. For instance, a rapidly moving image may require a higher extraction ratio.

4. In addition, the layered coding technique in the second solution in the prior art can also be used to provide such media stream. That is, one or more of the above three processing methods is employed to encode the base layer to generate a channel switch media stream of a related channel. If the media stream of the base layer coding itself is in a small size, it may also be used directly as the channel switch media stream of the related channel.

It is noted that the purpose of lowering the bit rate of media stream or the bandwidth which it takes up is to meet the needs of rapid switching. Therefore, video resolution or the extraction ratio of I frame cannot be lowered without limitation. The ration should be determined based on the user experience. In addition, the above described video refers to a media stream or a video file. If it is a media stream, the channel switch media stream has to be generated in real time. If the channel switch media stream is generated before the channel is being played, then the object to be processed is a video file and the processing result is also a video file.

Encapsulation and transmission of the channel switch media stream are described below.

After the media server has processed the media stream of the channel in accordance with the foregoing method, the whole media stream may be used in support of channel switching. The media server may be divided into a first media server for providing a normal media stream and a second media server for providing a channel switch media stream. The second media server with a channel switching media support can be provided independently or can be provided in combination with the first media server for providing a normal media stream. Manners for media encapsulation and transmission between the media server with channel switching support and the terminal are explained herein.

1) Organization manner for media content of a target channel to be switched.

The media server may generate a media stream in accordance with the foregoing methods and may perform encapsulation in accordance with the following manners.

1. Transmission Stream (TS) encapsulation. The format of TS is defined in ISO/IEC 13818-1:2000 (ITU-T Recommendation H.222.0). According to the definition of TS, content of a signal channel or multiple channels can be encapsulated at one time. Therefore, the media streams generated for multiple channels according to the above method can be encapsulated into one media stream as a whole. For TS format, the transmission over IP network may conform to RFC 2250 ("RTP Payload Format for MPEG1/MPEG2 Video") specification or Digital Video Broadcasting (DVB) defined by DVB organization, and specification on Transport of MPEG-2 Based DVB Services over IP Based Networks.

2. Encapsulating and transmitting channel switch media stream according to Internet Streaming Media Alliance (ISMA) specification. The ISMA specification includes ISMA implementation specification v1.0 and v2.0. ISMA utilizes RTP protocol to transmit data. One transmission typically contains the content of one channel only.

In order to deliver the channel switch media stream between the second media server for supporting channel switching and the terminal, IP unicast and IP multicast can be used to conduct transmission.

**Table 1**

| | TS | ISMA |
|---|---|---|
| Unicast Transmission | (1) | (3) |
| Multicast Transmission | (2) | have no practical usage |

Referring to the encapsulation and transmission method given above, four types of mechanisms for transmitting channel switch media stream can be obtained as shown in Table One. (1) TS encapsulation + IP unicast transmission; (2) TS encapsulation + IP multicast transmission; (3) ISMA encapsulation + IP unicast transmission; (4) ISMA encapsulation + IP multicast transmission. The fourth mechanism is of no practical usage, which will not be discussed in detail herein. The first three mechanisms are described respectively below.

(1) Transmitting from the media server to the terminal in an IP unicast manner and employing TS encapsulation.

In the process of service interaction, the application processing module may specify the address of the second media server for the terminal and negotiate the transport channel with the terminal. The channel does not transmit content when the user is watching program in a normal situation. When the user switches the channel, the application processing module may be informed via a service control signaling. By way of example where IMScore serves as the intermediate processing module, the service control signaling may be SIP "reinvite", "info" or "notify", etc. After that, the application processing module control, notify or request the second media server to send, to the terminal, the media stream of the target channel to be switched to via a unicast channel. It should be noted that the above only describes the transmission of the channel switch media stream. Actually, the application server is supposed to request, at the same time, the first media server for providing the media stream requested by the user.

After the terminal receives the channel switch media stream, the terminal may display the decoded low resolution image to the user, for a transition of channel switching. The terminal may need to further enlarge the low resolution image to adapt to the screen size of the terminal.

Additionally, the channel switch media streams of all the channels can be provided to the user in the unicast stream. Then, during switching, the request for channel switch media stream can be made without additional service layer signaling. The delay due to the signaling interaction can be reduced.

To avoid the situation that some users may watch the program free of charge by receiving the channel switch media stream, a coding mechanism can be used to only recover stationary information or quasi-dynamic information from the information in the stream. Therefore, the receiver may not be able to achieve the experience when watching continuously. In terms of the above method of how the media server generates the channel switching media stream, this media stream itself may well satisfy the requirement.

(2) Transmitting from the second media server to the user in a multicast manner and employing TS encapsulation.

Like (1), the TS stream may carry the channel switch media streams of all the channels and send them to the user.

The processing regarding this manner is simpler. The service may carry the multicast address to which the second media server send the channel switching information and the multicast address is sent to the user. The user receives this multicast stream via an IGMP or MLD request. Regarding the IGMP or MLD request, the network side may send the multicast data to the user without verification. Otherwise, if the verification process is considered, a delay in verification will be increased.

Of course, the method for preventing user from watching the program free of charge in mechanism (1) can be used.

(3) Transmitting from the second media server to the user in a unicast manner and employing ISMA encapsulation.

This manner is similar to the manner of using TS to encapsulate information for a single target channel. The only difference is that the encapsulation manner is different, and the processing mechanisms, however, are the same.

It should be noted that the description herein is merely illustration of TS and ISMA encapsulation manner. In fact, the media stream or media file processed by the media server may also be encapsulated or transmitted in other possible media encapsulation formats. Therefore, the present invention is not limited in this respect.

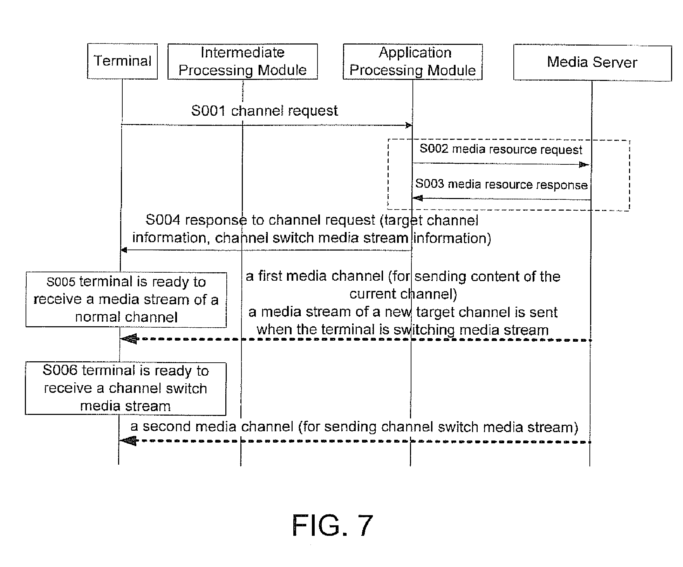

The process of the foregoing methods is detailed below, as illustrated in Figure 7. Referring to Figure 7, the process includes the following steps.

In order to allow the terminal to quickly switch the channel, the terminal may need to obtain the address information of the media server first.

In Step S001, the terminal sends a channel request to the application processing module. The request is routed to the application processing module via an intermediate processing module. This request may be a first channel request from the terminal, or a channel switching request. The request carries a corresponding indicator, indicating that the request is a first channel request or a channel switching request.

In Step S002, the application processing module queries for the application status of the terminal. If the terminal is already watching the program, the terminal is considered as having acquired the address information of the channel switch media stream. That is, the request is a channel switching request; otherwise, the request is first channel request information.

If the channel request from the terminal is a first channel request, a media resource request from the application processing module to the media server may include both the request for information of the intended channel but also the request for channel switch media stream information supported by the media server.

In the case where the request is a channel switching request, if the application processing module needs to instruct the media server to send the channel switch media stream before the channel switch media stream can be sent out, the application processing module may add an instruction for sending channel switch media stream in the request sent to the media server. Of course, this request may also include request for original channel media stream.

In Step S003, the media server allocates the media resources based on the request of the application processing module and returns, in an response, information of target channel requested by the user, e.g., channel multicast address, channel port, etc. If the application processing module also requests the channel switch media stream information in the last step, the media server may return corresponding information in the response.

As stated above, the media server may support a unicast TS manner, a unicast ISMA manner, or a multicast TS manner for transmission of the channel switch media stream. Therefore, the information carried may include <manner of encapsulating channel switch media stream, manner of transmitting channel switch media stream, channel switch service support information>, etc. The manner of encapsulating channel switch media stream may be "TSoRTP", "ISMA", etc. The manner of transmitting channel switch media stream may be "IP multicast" or "IP unicast", etc. However, the channel switch service support information may vary with the manner of transmitting channel switch media stream. For instance, for "IP multicast" manner, it may include <multicast address of the channel switch media stream, multicast port of the channel switch media stream>, etc. For "IP unicast" manner, it may include <unicast address of the channel switch media stream, unicast port of the channel switch media stream>, etc.

In addition, if the foregoing request includes instruction for sending channel switch media stream, the media server should first send the instructed media stream to the terminal.

In step S004, the application processing module returns, to the terminal, a response message carrying media description information of the target channel provided by the media server. If the previous step of returning information includes channel switch media stream information, this information may also be returned to the terminal together.

If the normal media stream and the channel switch media stream transmitted by the media server are all transmitted in a multicast manner, the foregoing step S002 and step S003 may only need to be performed when a first user requests the service. Because the normal media stream and channel switch media stream are already in the middle of transmission when a subsequent user intends to send a request, the subsequent user may not need to send a further request. Instead, the application processing module may send, to the terminal, the <manner of encapsulating channel switch media stream, manner of transmitting channel switch media stream, channel switch service support information> and the media description information of the target channel.

In Step S005, if it is a first channel request, the terminal may prepare to receive the media stream of the target channel in the first media channel based on the target channel information returned from the application processing module.

In fact, if the media stream of the target channel is transmitted in the IP multicast manner, the preparation procedure might include a procedure that the terminal requests a media stream from an access node using IGMP or MLD protocol and the access node forwards the multicast media stream to the terminal.

In Step S006, if it is the first time that the terminal sends a channel request, the terminal may prepare to receive the channel switch media stream in the second media channel based on the channel switch media stream information returned from the application processing module. The processing may vary based on the returned information.

For a unicast transmission, the terminal might need to set up a corresponding connection with the media server based on the specified <unicast address of the channel switch media stream, unicast port of the channel switch media stream>, etc. Or, the terminal may prepare to receive the channel switch media stream at the specified port according to the information. For an IP multicast transmission, the terminal may need to request a multicast stream from the network side using IGMP or MLD protocol based on the specified <multicast address of the channel switch media stream, multicast port of the channel switch media stream>, etc., and prepare to receive a corresponding channel switch media stream information at the specified port.

If it is not the first time that the terminal requests the channel, the channel switching transmission channel should exist already and the processing procedure is a little bit different.

1) In the case where a unicast manner is adopted and TS only encapsulates a channel switch media stream for a single channel, the application processing module should request the channel switching media server to first send the channel switch media stream of the specified target channel to the user when processing the channel switching channel request from the user. The user may receive the channel switch media stream with priority in a unicast channel for the purpose of switching "compensation."

2) In the case where a unicast manner is adopted and the TS encapsulates the channel switch media streams of all the channels, when the user switches the channel, the channel switch media stream of the target channel should be sent in advance. Therefore, this media stream should be received by the terminal already. At this point, the terminal just needs to retrieve the corresponding media stream quickly from the received media streams for switching "compensation."

3) In the case where the multicast manner is adopted and the TS encapsulates the channel switch media streams of all the channels, the processing procedure is the same as 2).

4) In the case of a unicast manner and ISMA encapsulation manner, the processing procedure is the same as that in 1).

In addition, in steps S002 and S003 of the above process, it is also possible that the application processing module does not request the <manner of encapsulating channel switch media stream, manner of transmitting channel switch media stream, channel switch service support information> and the media description information of the target channel, from the media provider device. Such information may be pre-configured in the application processing module. Once the application processing module receives the user request, it only needs to return the information to the terminal immediately. The subsequent process is the same as the foregoing.

In addition, during the above process, when the terminal requests for channel information, the application processing module can also send description information of all the normal channels and channel switch media stream information, such as <manner of encapsulating channel switch media stream, manner of transmitting channel switch media stream, channel switch service support information>, etc., to the terminal at a time. Instead of requesting for such information again, subsequent terminal just need to use these information to request for channel switching using IGMP or MLD, etc. When transmitting the request, the terminal may perform a swift channel switching "compensation" using the channel switch media stream. Of course, the description herein is on the premise that the channel switch media stream is sent to the terminal in a multicast manner and the video stream information may always be available to the terminal no matter whether the user requests the information or not.

It should be noted that various combinations of IPTV multicast service setup manners and channel switching manners can be conceived. Only several possible scenarios are given herein by way of example. The present invention is not limited to the detailed manner.

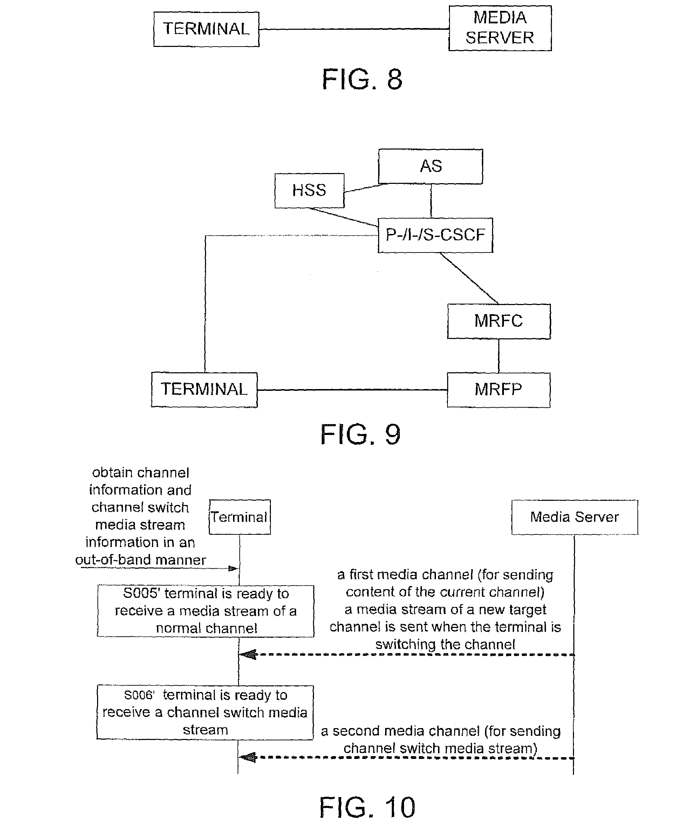

Figure 8 illustrates a network architecture according to another embodiment of the present invention. Referring to Figure 8, the system only includes a terminal and a media server In Figure 8, service layer signaling is not employed to obtain the target channel description information and channel switch media stream information, and to request for channel switching.

Here, an IP network connects between the terminal and the media server. The terminal may obtain channel address information of the media server via an out-of-band mechanism. The out-of-band mechanism may include broadcasting, newspaper, website, e-mail, electronic program list, etc. Such methods are disclosed in prior art, which is omitted herein for brevity. After obtaining this information, the terminal may set up a first media channel and a second media channel with the media server for media stream transmission. When transmitting the channel description information described above, the address information of the channel switch media stream may also be transmitted at the same time. Then, the terminal performs a corresponding processing as described in the step S005 and step S006 in the above process based on these information. The processing procedure is shown in Figure 10, where the steps S005' and S006' are similar to the steps S005 and S006 in Figure 7, which is omitted herein for brevity.

It should be noted that it is assumed that the terminal uses IGMP or MLD to perform channel request. Since there is no so called application processing module, the description herein is mainly focused on a solution for sending channel switch media streams of all the channels in one channel switch media stream. Therefore, the method shown in Figure 8 is applicable only in the instance where the message is transmitted in a unicast or multicast manner and all the channel switch media streams are encapsulated in a TS manner.

Further, referring to logic structure in Figure 6, in TISPAN NGN architecture, the intermediate processing module may be an IMScore in Figure 1 or other media support component. The media server may be a traditional media server, or a Multimedia Resource Function (MRF) entity in NGN, responsible for providing media resources, such as a media stream. In this architecture, processing can be done in the process shown in Figure 7.

Figure 9 illustrates a network structure where IMScore functions as an intermediate processing module. In Figure 9, IMScore is shown in a simplified form. The specification of IMScore is defined in 3GPP. Here, the terminal is adapted to perform service negotiation with the application server (AS), requesting service from the application server. A Proxy CSCF (P-CSCF) is adapted to forward request and response message between the terminal and the serving CSCF (S-CSCF). An Interrogating CSCF (I-CSCF) is adapted to query the terminal information. The S-CSCF is adapted to trigger the service request message to the AS to route the message based on a triggering rule. A Home Subscriber Server is adapted to provide necessary user information to at least one of the I-CSCF and S-CSCF. The AS is adapted to provide service to the user, perform necessary service negotiation and request the media resource from the multimedia resource control function (MRFC) entity according to the negotiation result. The MRFC receives a media resource request from the AS and control the multimedia resource processing function (MRFP) entity to allocate the media resource. Under the control of MRFC, the MRFP provides the terminal with the media resources, such as a video or audio program stream.

In normal situation, the MRFC and MRFP together are also referred to as MRF, which equals the foregoing media server.

In addition, besides that the intermediate processing module is instantiated as IMScore, the MRF herein may serve as a media server and the AS serves as the application processing module.

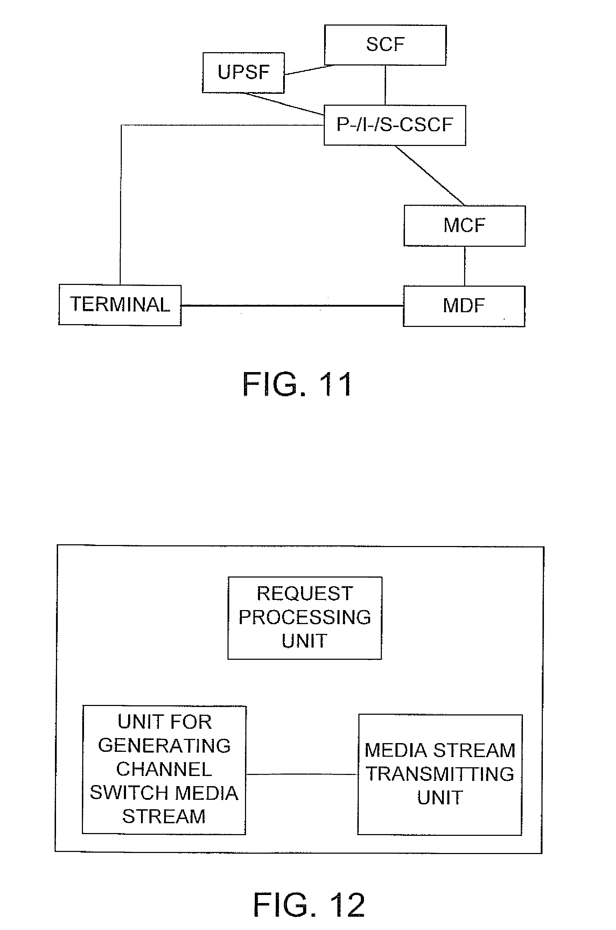

Figure 11 illustrates another network structure according to an embodiment of the present invention. In Figure 11, a user Profile Server Function (UPSF) entity may function as the HSS in Figure 9 and may achieve similar functions as the HSS. The service control function (SCF) entity may function as an SIP application server. The IPTV media function (MF) entity may function as a media server, which equals the MRF and may be divided into a media control function (MCF) entity and a media delivery function (MDF) entity. Other devices, such as terminal P-CSCF, I-CSCF, S-CSCF, etc., have the same functionalities as the same device in Figure 9.

In Figure 11, the UPSF functions similarly as HSS. The UPSF is mainly used to provide necessary user information to at least one of the I-CSCF and S-CSCF.

The SCF is primarily responsible for authorizing a terminal at the initialization of a session; modifying the procedure, including checking the user data to determine whether or not to allow access to this service; and controlling the account. Optionally, the SCF may choose a corresponding media function entity.

The MF is primarily responsible for media stream control and delivery, and the MF can be divided into MCF and MDF. The MCF is mainly responsible for controlling media streams; optionally, monitoring the MDF status; managing the interaction with the terminal, such as processing VCR command or IGMP command; selecting an MDF when MCF controls multiple MDFs; sensing precisely different MDF statuses and content distribution; generating charging information. The MDF is mainly responsible for handling media delivery and some related functionalities.

It should be noted that the foregoing method is also applicable to the network structure illustrated in Figure 11 by merely replacing the AS with SCF, HSS with UPSF, and MRF with MF.

Figure 12 illustrates a diagram of a media server according to an embodiment of the present invention.

As shown in Figure 12, the media server may include at least a unit for generating channel switch media stream and a media stream transmitting unit.

The unit for generating channel switch media stream is adapted to generate a channel switch media stream for a corresponding channel based on the media stream of the channel. For instance, the unit may extract parts or all of the intra coding frames in a media stream of a corresponding channel to form the channel switch media stream. Alternatively, the unit may extract parts or all of the intra coding frames in a media stream of a corresponding channel, compress the extracted intra coding frames and form the channel switch media stream. Alternatively, the unit may extract parts or all of the intra coding frames in the base layer media stream of a corresponding channel from the channel media stream with layered coding, compress the extracted intra coding frames and form the channel switch media stream. In addition, the unit for generating channel switch media stream may generate a channel switch media stream in real time, or may pre-generate a streaming media file for the channel switch media stream.

The media stream transmitting unit is configured to send to the terminal the channel switch media stream and media stream of the channel. According to an embodiment of the present invention, the media stream transmitting unit may adopt the manner described in Table One or other manner to send the channel switch media stream of the target channel and the media stream of the target channel, which is omitted herein for brevity.

As illustrated in Figure 12, the media server may further include a request processing unit. The request processing unit is configured to process a media resource request of other external entities such as the terminal, the application processing module, the AS, the SCF, etc., and return corresponding information based on the media resource request, or return a corresponding media stream via the media stream transmitting unit, return the corresponding information together with the corresponding media stream via the media stream transmitting unit. The corresponding media stream is at least one of the target channel media stream and the media switching stream.

The foregoing is merely preferred embodiments of the present invention, which shall not be construed as limitation to the present invention. Any modifications, equivalents, improvements, etc., made within the spirit and principle of the present invention fall within the scope of the present invention.

## Claims

1. A method for quick switching of IPTV channels based on a next generation network, **characterized in** comprising:
receiving, by a terminal, a channel switch media stream of a target channel and a media stream of the target channel; and
playing the channel switch media stream of the target channel before the media stream of the target channel can be played.

2. The method of claim 1, **characterized in that,** before receiving, by the terminal, the channel switch media stream of the target channel and the media stream of the target channel, the method further comprises:
acquiring, by the terminal, target channel information and channel switch media stream information; and
establishing, between a media server and the terminal, a first media channel for transmitting a normal media stream and a second media channel for transmitting the channel switch media stream.

3. The method of claim 2, **characterized in that,** the acquiring, by the terminal, the target channel information and the channel switch media stream information comprises:
acquiring, by the terminal, the information via an out-of-band mechanism.

4. The method of claim 3, **characterized in that,** the channel switch media stream information comprises:
a manner of encapsulating channel switch media stream, a manner of transmitting channel switch media stream and channel switch service support information.

5. The method of claim 4, **characterized in that,** the manner of encapsulating channel switch media stream is Transport Stream encapsulation, the manner of transmitting channel switch media stream is IP unicast, and the channel switch service support information is a unicast address and a port of the channel switch media stream; or
the manner of encapsulating channel switch media stream is Transport Stream encapsulation, the manner of transmitting channel switch media stream is IP multicast, and the channel switch service support information is a multicast address and a port of the channel switch media stream.

6. The method of claim 2, **characterized in that,** the acquiring, by the terminal, the target channel information and the channel switch media stream information comprises:
sending, by the terminal, a first channel request to an application processing module; requesting, by the application processing media module, the target channel information and the channel switch media stream information from a media server; and
returning, by the media server, the target channel information and the channel switch media stream information, to the application processing module; sending, by the application processing module, the target channel information and the channel switch media stream information to the terminal.

7. The method of claim 2, **characterized in that,** the acquiring, by the terminal, the target channel information and the channel switch media stream information comprises:
sending, by the terminal, a channel request to an application processing module; and
returning, by the application processing media module, the target channel information and the channel switch media stream information to the terminal.

8. The method of claim 6 or 7, **characterized in that,** the channel switch media stream information comprises a manner of encapsulating channel switch media stream, a manner of transmitting channel switch media stream and channel switch service support information.

9. The method of claim 8, **characterized in that,** the manner of encapsulating channel switch media stream is Transport Stream encapsulation, the manner of transmitting channel switch media stream is IP unicast, and the channel switch service support information is a unicast address and a port of the channel switch media stream; or
the manner of encapsulating channel switch media stream is Transport Stream encapsulation, the manner of transmitting channel switch media stream is IP multicast, and the channel switch service support information is a multicast address and a port of the channel switch media stream; or
the manner of encapsulating channel switch media stream is Internet Streaming Media Alliance ISMA encapsulation, the manner of transmitting channel switch media stream is IP unicast, and the channel switch service support information is a unicast address and a port of the channel switch media stream.

10. The method of claim 1, **characterized in** comprising sending the channel switch media stream in a multicast manner in the case where the request from the terminal is not received or after the request from the terminal is received.

11. The method of claim 1, **characterized in that,** the receiving, by the terminal, the channel switch media stream of the target channel comprises:
sending, by a media server, to the terminal, a composite media stream which comprises channel switch media streams of multiple channels, wherein the channel switch media streams comprises the channel switch media stream of the target channel.

12. The method of claim 1, **characterized in that,** before receiving, by the terminal, the channel switch media stream of the target channel and the media stream of the target channel, the method further comprises:
generating, by a media server, the channel switch media stream.

13. The method of claim 12, **characterized in that,** the generating, by the media server, the channel switch media stream comprises:
extracting parts or all of intra coding frames in a media stream of a corresponding channel and forming the channel switch media stream; or
extracting parts or all of intra coding frames in a media stream of a corresponding channel, compressing the extracted intra coding frames, and forming the channel switch media stream; or
using a base layer media stream generated due to layered coding for a corresponding channel as the channel switch media stream; or
extracting parts or all of intra coding frames in a base layer media stream of a corresponding channel, from a channel media stream with a layered coding and using the extracted intra coding frames as the channel switch media stream; or
extracting parts or all of intra coding frames in a base layer media stream of a corresponding channel, from a channel media stream with layered coding, compressing the extracted intra coding frames, and using the extracted intra coding frames as the channel switch media stream.

14. The method of claim 12 or 13, **characterized in that,** the generating, by the media server, the channel switch media stream comprises:
generating in real time a channel switch media stream based on a media stream of a corresponding channel; or
pre-generating a streaming media file for the channel switch media stream based on a streaming media file of a corresponding channel.

15. A system for quick switch of IPTV channels, **characterized in** comprising:
a terminal, configured to initiate a channel switching request, and play a channel switch media stream of a target channel before a media stream of the target channel can be played; and
a media server, configured to send to the terminal the channel switch media stream of the channel and the media stream of the target channel.

16. The system of claim 15, **characterized in that,** the terminal is further configured to acquire target channel information and channel switch media stream information based on an out-of-band mechanism and establish between the media server and the terminal a first media channel for transmitting a normal media stream and a second media channel for transmitting the channel switch media stream.

17. The system of claim 15, **characterized in** further comprising an intermediate processing module and an application processing module, wherein
the intermediate processing module is configured to forward messages between the terminal and the application processing module and between the application processing module and the media server;
the application processing module is configured to request the target channel information and the channel switch media stream information from the media server based on a first channel request of the terminal, and send to the terminal the target channel information and the channel switch media stream information returned from the media server; and
the terminal is further configured to establish between the media server and the terminal a first media channel for transmitting a normal media stream and a second media channel for transmitting the channel switch media stream based on the target channel information and the channel switch media stream information.

18. The system of claim 17, **characterized in that,** the system has at least one of the following:
an interface between the terminal and the intermediate processing module utilizes a Session Initiation Protocol SIP, a Hypertext Transfer Protocol HTTP or a Realtime Streaming Protocol RTSP;
an interface between the application processing module and the intermediate processing module utilizes SIP, HTTP or RTSP; and
an interface between the intermediate processing module and the media server utilizes SIP, Diameter, RTSP or H. 248 protocol.

19. The method of claim 17, **characterized in that,** the intermediate processing module comprises a Proxy Call Session Control Function P-CSCF entity, an Interrogating Call Session Control Function I-CSCF entity, a Serving Call Session Control Function S-CSCF entity; wherein
the application processing module is an application server AS;
the media server is a Multimedia Resource Function MRF entity; and
the MRF includes a Media Resource Control Function MRCF entity and a Media Resource Processing Function MRFP entity, wherein the MRCF is configured to receive a request from the AS and control the MRFP to perform resource allocation, the MRFP is configured to provide, under the control of the MRFC, media resources to the terminal.

20. The method of claim 17, **characterized in that,** the intermediate processing module includes a Proxy Call Session Control Function P-CSCF entity, an Interrogating Call Session Control Function I-CSCF entity, a Serving Call Session Control Function S-CSCF entity; wherein
the application processing module is a Service Control Function SCF entity;
the media server is a Media Function MF entity; and
the MF comprises a Media Control Function MCF entity, a Media Delivery Function MDF entity, wherein the MCF is configured to handle the control of media stream and the MDF is configured to handle the delivery of the media.

21. The system of claim 15, **characterized in that,** the media server is further configured to generate the channel switch media stream based on the media stream of a corresponding channel.

22. The system of claim 15, **characterized in that,** the media server comprises a first media server for providing the media stream of the target channel and a second media server for providing the channel switch media stream.

23. A media server, **characterized in** comprising:
a unit for generating channel switch media stream, configured to generate a channel switch media stream of a target channel based on a media stream of the target channel; and
a media stream transmitting unit, configured to send to the terminal at least one of the media stream and the channel switch media stream of the target channel.

24. The media server of claim 23, **characterized in** further comprising:
a request processing unit, configured to process a media resource request from another entity, and return corresponding information based on the media resource request; or configured to process a media resource request from another entity and return, based on the media resource request, at least one of the media stream and the channel switch media stream of the target channel via the media stream transmitting unit; or configured to process a media resource request from another entity and return corresponding information based on the media resource request and return at least one of the media stream and the channel switch media stream of the target channel via the media stream transmitting unit.
